# EUROPEAN PATENT APPLICATION

(11) **EP 4 772 384 A1**
(43) Date of publication of application: **08.07.2026**
(21) Application number: 24861524.7
(22) Date of filing: 30.04.2024
(51) Int. Cl.: B60L 1/00

(54) **VEHICLE INTEGRATED DOMAIN CONTROLLER ARCHITECTURE, VEHICLE MANAGEMENT SYSTEM AND VEHICLE**

(30) Priority: 08.09.2023 CN 202311162511
(71) Applicant: Contemporary Amperex Intelligence Technology (Shanghai) Limited, Shanghai 201306 (CN)
(72) Inventor: WU, Kai, Shanghai 201306 (CN); ZHANG, Dapeng, Shanghai 201306 (CN); REN, Shengguang, Shanghai 201306 (CN); ZHOU, Pengfei, Shanghai 201306 (CN); LI, Xiuling, Shanghai 201306 (CN); SUN, Yuefu, Shanghai 201306 (CN)
(74) Representative: Gong, Jinping
(86) International application number: PCT/CN2024/091022
(87) International publication number: WO 2025/050674

(57) **Abstract**

A vehicle integrated domain controller architecture (800), a vehicle management system, and a vehicle are disclosed. The vehicle integrated domain controller architecture (800) includes: a low-voltage battery (300), a battery management module (100), a low-voltage power distribution module (200), and a thermal management module (900), where the low-voltage battery is electrically connected to the low-voltage power distribution module; the low-voltage power distribution module is configured with a low-voltage load access terminal (210) configured to connect to a low-voltage load; the thermal management module is configured with a thermal management load access terminal (910) configured to connect to a thermal management load; and the battery management module, and the low-voltage power distribution module, and the thermal management module share the same controller. By integrating in the controller a function of managing the low-voltage battery and a function of managing the thermal management load and the low-voltage load, the control lines are simplified.

## Description

This application claims priority to Chinese Patent Application No. 202311162511.9, filed on September 8, 2023 and entitled "VEHICLE INTEGRATED DOMAIN CONTROLLER ARCHITECTURE, VEHICLE MANAGEMENT SYSTEM, AND VEHICLE," which is incorporated herein by reference in its entirety.

### TECHNICAL FIELD

This application relates to the field of vehicle technologies, and in particular to a vehicle integrated domain controller architecture, a vehicle management system, and a vehicle.

### BACKGROUND

The existing low-voltage power distribution system for vehicle bodies mainly adopts a discrete low-voltage lithium-ion battery technology, and is equipped with a fuse box product to implement primary power distribution for low-voltage loads, and then a battery management system performs battery management on the low-voltage lithium-ion batteries.

However, in the current power supply architecture, the low-voltage power distribution system and the battery management system are independently configured. In addition, the fuse boxes adopted in the low-voltage power distribution system usually rely on a traditional relay or fuse solution, which suffers from drawbacks such as large volume, complicated wiring, and high maintenance costs.

### TECHNICAL PROBLEM

In view of the above problems, this application provides a vehicle integrated domain controller architecture, a vehicle management system, and a vehicle. This solution can address the problems of large space occupation, complicated wiring, and high maintenance costs of driving and control circuits, which are caused by the separate configuration of the low-voltage power distribution system, the battery management system, and the thermal management system in the current vehicle power supply architecture and consequent dispersion of controllers across the vehicle body.

### TECHNICAL SOLUTION

A first aspect of embodiments of this application provides a vehicle integrated domain controller architecture, including: a low-voltage battery, a battery management module, a low-voltage power distribution module, and a thermal management module; where
the low-voltage battery is electrically connected to the low-voltage power distribution module;
the low-voltage power distribution module is configured with low-voltage load access terminals; where at least one of the low-voltage load access terminals is configured to connect a low-voltage load;
the thermal management module is configured with a thermal management load access terminal configured to connect a thermal management load; and
the battery management module, the low-voltage power distribution module, and the thermal management module share the same controller, and the controller integrates a function of managing the low-voltage battery and a function of managing the thermal management load and the low-voltage load.

In the technical solution of the embodiments of this application, the low-voltage power distribution module is configured with low-voltage load access terminals configured to connect low-voltage loads, the thermal management module is configured with a thermal management load access terminal configured to connect a thermal management load, the low-voltage power distribution module is configured to regulate the power output of the low-voltage battery, the battery management module is configured to manage the low-voltage battery, the thermal management module is controlled by the controller to manage the thermal management load, and the battery management module, the low-voltage power distribution module, and the thermal management module share the same controller. By integrating in the controller the function of managing the low-voltage battery and the function of managing the thermal management load and the low-voltage load, the battery management solution, the low-voltage power distribution solution, and the control module in the thermal management module are innovatively integrated into the same controller. This simplifies the control circuits and offers the advantages such as low cost and simple architecture.

In some embodiments, the vehicle integrated domain controller architecture further includes:
a low-voltage power input terminal electrically connected to the low-voltage power distribution module, and configured to connect a low-voltage power supply obtained by conversion from a power battery; where
the low-voltage power distribution module is further configured to perform power distribution for the low-voltage power supply.

In the technical solution of the embodiments of this application, the low-voltage power input terminal is configured to connect a low-voltage power supply obtained by voltage conversion from the power battery, and the low-voltage power distribution module distributes the low-voltage power supply to the low-voltage load access terminals. For example, under a condition of a plurality of low-voltage load access terminals, power distribution is performed according to the power demand of the low-voltage load connected to each low-voltage load access terminal, or power distribution may be performed according to the operating state of the connected low-voltage loads. This achieves dynamic adjustment of the output power of the low-voltage power supply, thereby fulfilling the objective of protecting the low-voltage battery and the low-voltage loads.

In some embodiments, the battery management module includes a first switch module controlled by the controller; where
the first switch module is configured to manage the charging and discharging process of the low-voltage battery under the control of the controller.

In the technical solution of the embodiments of this application, the first switch module is controlled by the controller, and the controller controls the on/off state of the first switch module to perform the charging and discharging operations of the low-voltage battery. This enables the low-voltage power distribution module to share the first switch module, which reduces the wiring harness between the low-voltage power distribution module and the battery management module and eliminates the potential safety hazards caused by short circuits in the wiring harness between different circuit boards.

In some embodiments, the low-voltage battery is electrically connected to the low-voltage power distribution module via the first switch module.

In the technical solution of the embodiments of this application, the first switch module is connected between the low-voltage battery and the low-voltage power distribution module, the low-voltage battery is electrically connected to the low-voltage power distribution module via the first switch module, the first switch module is controlled by the controller, and the controller controls the on/off state of the first switch module to control the on/off state between the low-voltage battery and the low-voltage power distribution module. The first switch module controls the power distribution output of the low-voltage power distribution module. This enables the low-voltage power distribution module and the battery management module to share the first switch module, which reduces the wiring harness between the low-voltage power distribution module and the battery management module and eliminates potential safety hazards caused by short circuits in the wiring harness between different circuit boards.

In some embodiments, the low-voltage power distribution module further includes a second switch module controlled by the controller; where
the second switch module is configured to control an input state of the low-voltage power input terminal.

In the technical solution of the embodiments of this application, the second switch module is controlled by the controller to control the input state of the low-voltage power input terminal, thereby controlling the power distribution output of the low-voltage power distribution module. For example, the low-voltage power input terminal can be controlled to charge the low-voltage battery, or at least one of the low-voltage power input terminal and the low-voltage battery can be controlled to supply power to the low-voltage load access terminal. This achieves integrated control of the battery management module and the low-voltage power distribution module.

In some embodiments, the second switch module is connected between the low-voltage power input terminal and the low-voltage load access terminal; and/or
the second switch module is connected between the low-voltage power input terminal and the battery management module.

In the technical solution of the embodiments of this application, the second switch module is controlled by the controller to control the input state of the low-voltage power input terminal, thereby controlling the power distribution output of the low-voltage power distribution module. For example, the low-voltage power input terminal can be controlled to charge the low-voltage battery, or at least one of the low-voltage power input terminal and the low-voltage battery can be controlled to supply power to the low-voltage load access terminal. This achieves integrated control of the battery management module and the low-voltage power distribution module.

In some embodiments, the low-voltage power distribution module further includes a third switch module controlled by the controller; where
the third switch module is configured to control a current direction between the low-voltage power input terminal and the low-voltage battery.

In some embodiments, the third switch module is connected between the second switch module and the first switch module.

In the technical solution of the embodiments of this application, the third switch module is controlled by the controller, and the third switch module is connected between the second switch module and the first switch module. The controller can control the on/off states of the first switch module, the second switch module, and the third switch module, and can control the low-voltage power input terminal to charge the low-voltage battery, or control at least one of the low-voltage power input terminal and the low-voltage battery to supply power to the low-voltage load access terminals. This enables the third switch module to control the current direction between the low-voltage power input terminal and the low-voltage battery, thereby achieving integrated control of the power output of the battery management module and the low-voltage power distribution module.

In some embodiments, the low-voltage load access terminal includes a first low-voltage load access terminal and a second low-voltage load access terminal; where
the first low-voltage load access terminal and the second low-voltage load access terminal are respectively connected to a first terminal and a second terminal of the third switch module.

In the technical solution of the embodiments of this application, the first low-voltage load access terminal and the second low-voltage load access terminal are respectively connected to the first terminal and the second terminal of the third switch module. The controller can control the on/off states of the first switch module, the second switch module, and the third switch module, and control the current direction between the low-voltage power input terminal and the low-voltage battery through the third switch module. This achieves integrated control of the power output of the battery management module and the low-voltage power distribution module.

In some embodiments, the low-voltage power distribution module further includes:
a fourth switch module connected between the first terminal of the third switch module and the first low-voltage load access terminal and controlled by the controller; and
a fifth switch module connected between the second terminal of the third switch module and the second low-voltage load access terminal and controlled by the controller.

In the technical solution of the embodiments of this application, a plurality of first low-voltage load access terminals can be provided to respectively connect a plurality of low-voltage loads, a fourth switch module is provided between each first low-voltage load access terminal and the second switch module, and the fourth switch module controls the power-on state of the corresponding first low-voltage load access terminal. A plurality of second low-voltage load access terminals are provided to respectively connect a plurality of low-voltage loads, a fifth switch module is provided between each second low-voltage load access terminal and the third switch module, and the fifth switch module controls the power-on state of the corresponding second low-voltage load access terminal.

In some embodiments, the thermal management module obtains power from at least one of the low-voltage load access terminal, the low-voltage power input terminal, or the low-voltage battery.

In the technical solution of the embodiments of this application, the thermal management module may be connected to the low-voltage load access terminal to obtain power from the low-voltage power distribution module, or may be connected to the low-voltage power input terminal to connect the low-voltage power supply obtained by conversion from the power battery to obtain power from an external source.

In some embodiments, the controller is further connected to the thermal management load, and the controller is configured to send a thermal management control signal to the thermal management load to manage the thermal management load.

In the technical solution of the embodiments of this application, the controller may be directly connected to the thermal management load and send a thermal management control signal to the thermal management load, and the thermal management load may adjust its own state according to the received thermal management control signal. This achieves the objective of thermal management of the vehicle under the condition of sharing the same controller with the battery management module.

In some embodiments, the thermal management module further includes a plurality of thermal management drive units; where
the thermal management drive unit is configured to manage the thermal management load according to a thermal management control instruction sent by the controller.

In the technical solution of the embodiments of this application, a plurality of thermal management loads are connected via the load access terminals, and each thermal management drive unit controls the state of the corresponding thermal management load according to a thermal management control instruction sent by the controller. The thermal management load does not need to be connected to a separate power supply or a separate control line, thereby enabling direct drive of the thermal management loads, simplifying the wiring layout of the thermal management loads, and eliminating potential faults in signal lines and power lines caused by directly connecting the thermal management load to the power supply or the controller.

In some embodiments, the thermal management module further includes a plurality of sensor units, where the plurality of sensor units are configured to sample sampling nodes in the thermal management load to obtain thermal management sampling signals and send the signals to the controller; and the controller is further configured to adjust a state of the thermal management drive unit according to the thermal management sampling signals.

In the technical solution of the embodiments of this application, the sensor units sample the thermal management loads to obtain operating states of the thermal management loads, and the controller determines whether the thermal management loads are operating abnormally according to the sampled thermal management sampling signals, and adjusts the states of the thermal management drive units in real time, thereby reducing the probability of potential safety hazards in the entire vehicle.

In some embodiments, the vehicle integrated domain controller architecture includes a first circuit board and a second circuit board; where
the low-voltage power distribution module and the battery management module are integrated on the first circuit board, and the controller is integrated on the first circuit board; and
the thermal management module is integrated on the second circuit board.

In the technical solution of the embodiments of this application, the battery management module, the low-voltage power distribution module, and the thermal management module share the same controller. The controller, together with a portion of its peripheral drive devices, constitutes the battery management module to manage the state of the low-voltage battery; the controller, together with another portion of its peripheral drive devices, constitutes the low-voltage power distribution module to perform power distribution control on the loads connected to the low-voltage load access terminals; and the controller, together with the thermal management drive units, constitutes the thermal management module to manage the thermal management loads. The low-voltage power distribution module and the battery management module are integrated on the same circuit board, the controller and the drive devices that need to be controlled externally are integrated on the first circuit board, and the thermal management drive units are integrated on the second circuit board. This helps simplify the circuits and reduce the probability of wiring harness failure.

In some embodiments, the vehicle integrated domain controller architecture includes a first circuit board and a second circuit board; where
the low-voltage power distribution module and the battery management module are integrated on the first circuit board; and
the thermal management module is integrated on the second circuit board, and the controller is integrated on the second circuit board.

In the technical solution of the embodiments of this application, the battery management module, the low-voltage power distribution module, and the thermal management module share the same controller. The controller, together with a portion of its peripheral drive devices, constitutes the battery management module to manage the state of the low-voltage battery; the controller, together with another portion of its peripheral drive devices, constitutes the low-voltage power distribution module to perform power distribution control on the low-voltage loads connected to the low-voltage load access terminals; and the controller, together with the thermal management drive units, constitutes the thermal management module to manage the thermal management loads. The drive devices in the low-voltage power distribution module and the battery management module are integrated on the first circuit board, and the controller and the thermal management drive unit that needs to be controlled externally are integrated on the second circuit board. This helps simplify the circuits and reduce the probability of wiring harness failure.

In some embodiments, the vehicle integrated domain controller architecture further includes a vehicle heat dissipation plate; where
the first circuit board is disposed on a first side of the vehicle heat dissipation plate, and the second circuit board is disposed on a second side of the vehicle heat dissipation plate, where the second side of the vehicle heat dissipation plate is opposite the first side of the vehicle heat dissipation plate.

In the technical solution of the embodiments of this application, the first circuit board and the second circuit board are respectively disposed on two sides of the same vehicle heat dissipation plate. By having the first circuit board and the second circuit board share the same vehicle heat dissipation plate, the heat dissipation efficiency of the vehicle heat dissipation plate can be improved, and the volume of the vehicle can be reduced.

In some embodiments, the second circuit board is disposed between the low-voltage battery and the vehicle heat dissipation plate.

In the technical solution of the embodiments of this application, by arranging the second circuit board to be close to the low-voltage battery, the thermal management drive unit may be closer to the low-voltage battery, enabling thermal management of the low-voltage battery and eliminating the potential safety hazards caused by excessive distance between the thermal management drive units and the thermal management loads or complicated routing of signal lines.

In some embodiments, the controller has at least two cores.

In the technical solution of the embodiments of this application, the controller has at least two cores, and a plurality of functions of the controller can be allocated to a plurality of cores, thereby improving the processing efficiency of the controller.

In some embodiments, at least one core of the controller is configured to process sampling signals to obtain sampling data, and at least one core of the controller is configured to generate control data according to the sampling data, and output corresponding control signals based on the control data to control operating states of the low-voltage power distribution module, the battery management module, and the thermal management module.

In the technical solution of the embodiments of this application, the controller includes at least two cores, one or a portion of the cores may be configured to process the sampling signals to obtain corresponding sampling data, and the other core or another portion of the cores may be configured to process the sampling data, obtain control data according to a preset operation, and generate control signals based on the control data and output the signals to the peripheral drive devices. The operating state of the low-voltage battery is controlled by controlling the operating state of the drive devices, and/or the power distribution output of the low-voltage loads is controlled by controlling the operating state of the drive devices, and/or the operating state of the thermal management module is controlled by controlling the operating state of the thermal management drive units.

In some embodiments, the vehicle integrated domain controller architecture includes:
an SBC power supply module connected to the controller, configured to supply power to the controller.

In the technical solution of the embodiments of this application, the SBC power supply module is integrated in the battery management module, and the SBC power supply module is configured to supply power to the controller. The power source of the SBC power supply module may be the low-voltage battery.

In some embodiments, a power input terminal of the SBC power supply module is connected to both the low-voltage battery and the low-voltage power input terminal, and a power output terminal of the SBC power supply module is connected to the controller.

In the technical solution of the embodiments of this application, the power input terminal of the SBC power supply module may obtain power from the low-voltage battery or the low-voltage power input terminal, and convert the voltage input from the low-voltage battery or the low-voltage power input terminal into the power supply voltage of the controller, thereby achieving the objective of supplying power to the controller and avoiding the problem of additional wiring harness required for the controller to obtain power from an external power supply.

In some embodiments, the vehicle integrated domain controller architecture further includes:
a sampling module configured to perform voltage sampling and/or current sampling on the battery management module, the low-voltage battery, the low-voltage power distribution module, and the thermal management module, and generate electrical parameter sampling signals; where
the controller is connected to the sampling module, and the controller is further configured to control an operating state of the battery management module according to the electrical parameter sampling signals.

In the technical solution of the embodiments of this application, a plurality of sampling nodes are provided in the low-voltage battery, the battery management module, the low-voltage power distribution module, and the thermal management module, and the voltages or currents of the plurality of sampling nodes are sampled to obtain electrical parameter sampling signals. The controller determines whether the voltages or currents of the sampling nodes corresponding to the electrical parameter sampling signals meet the operating condition of the current operating states according to the received electrical parameter sampling signals, thereby controlling the operating state of the low-voltage battery. Consequently, the low-voltage battery can adjust the operating state of the low-voltage battery in real time according to the electrical parameters of the low-voltage power distribution module and the low-voltage battery, reducing the potential safety hazards caused by circuit failure.

In some embodiments, the controller is further configured to control the operating state(s) of the thermal management module and/or the low-voltage power distribution module according to the electrical parameter sampling signals.

In the technical solution of the embodiments of this application, a plurality of sampling nodes are provided in the low-voltage battery, the battery management module, the low-voltage power distribution module, and the thermal management module, and the voltages or currents of the plurality of sampling nodes are sampled to obtain electrical parameter sampling signals. The controller determines whether the voltages or currents of the sampling nodes corresponding to the electrical parameter sampling signals meet the operating condition of the current operating states according to the received sampling signals, thereby controlling the operating state(s) of the thermal management module and/or the low-voltage power distribution module. Consequently, the thermal management module and/or the low-voltage power distribution module can adjust the operating state in real time according to the electrical parameter sampling signals, reducing the potential safety hazards caused by circuit failure.

In some embodiments, the controller controls a plurality of low-voltage load access terminals of the low-voltage power distribution module to be powered on in a time-division manner when a plurality of power-consuming loads are connected to the low-voltage load access terminals.

In the technical solution of the embodiments of this application, a plurality of low-voltage load access terminals of the low-voltage power distribution module may be respectively connected to a plurality of power-consuming loads. When a plurality of power-consuming loads are connected, the controller controls the plurality of low-voltage load access terminals to be powered on in a time-division manner, which can improve the output current of the low-voltage power distribution module and avoid the potential safety hazards caused by excessive output current when a plurality of low-voltage load access terminals are powered on simultaneously.

In some embodiments, the vehicle integrated domain controller architecture further includes: an AFE module connected to the low-voltage battery and the controller, and configured to perform information collection on the low-voltage battery and perform information interaction with the controller.

In the technical solution of the embodiments of this application, the AFE module is connected to both the low-voltage battery and the controller, and may perform information collection on the low-voltage battery through the AFE module and perform information interaction with the controller.

In some embodiments, the controller is connected to the AFE module via a non-multiplexed synchronous serial communication interface.

In the technical solution of the embodiments of this application, the controller is connected to the AFE module via a non-multiplexed synchronous serial communication interface, which enables the establishment of high-speed full-duplex communication between the controller and the AFE module. Data pins of the controller perform data transmission of a set type, for example, each communication module corresponds to one interactive function module, and thus operates independently without being affected by other pins or modules.

A second aspect of the embodiments of this application further provides a vehicle management system, where the vehicle management system includes the vehicle integrated domain controller architecture according to any one of the above embodiments.

A third aspect of the embodiments of this application further provides a vehicle, where the vehicle includes the vehicle integrated domain controller architecture according to any one of the above embodiments.

The above descriptions are merely an overview of the technical solution of this application. In order to understand the technical means of this application more clearly, it can be implemented in accordance with the contents of the description, and in order to make the above and other objectives, features, and advantages of this application more obvious and understandable, specific embodiments of this application are listed below.

### ADVANTAGEOUS EFFECTS

In the technical solution of the embodiments of this application, by integrating the vehicle integrated domain controller architecture described in any one of the above embodiments in an electric vehicle, the battery management module, the low-voltage power distribution module, and the thermal management module can be integrated into one structural member, and the battery management module, the low-voltage power distribution module, and the thermal management module share the same controller. This optimizes the electrical architecture of the vehicle power distribution system, simplifies associated components of the entire vehicle, and greatly reduces the costs of the entire vehicle.

### DESCRIPTION OF DRAWINGS

By reading the detailed description of the preferred embodiments below, various other advantages and benefits will become clear to those of ordinary skill in the art. The accompanying drawings are only used for the objective of illustrating the preferred embodiments and are not considered as limiting this application. Moreover, throughout the accompanying drawings, the same reference numerals are used to denote the same components. In the accompanying drawings:
FIG. 1 is a first schematic structural diagram of a vehicle integrated domain controller architecture according to an embodiment of this application;
FIG. 2 is a second schematic structural diagram of a vehicle integrated domain controller architecture according to an embodiment of this application;
FIG. 3 is a third schematic structural diagram of a vehicle integrated domain controller architecture according to an embodiment of this application;
FIG. 4 is a fourth schematic structural diagram of a vehicle integrated domain controller architecture according to an embodiment of this application;
FIG. 5 is a fifth schematic structural diagram of a vehicle integrated domain controller architecture according to an embodiment of this application;
FIG. 6 is a sixth schematic structural diagram of a vehicle integrated domain controller architecture according to an embodiment of this application;
FIG. 7 is a seventh schematic structural diagram of a vehicle integrated domain controller architecture according to an embodiment of this application;
FIG. 8 is an eighth schematic structural diagram of a vehicle integrated domain controller architecture according to an embodiment of this application;
FIG. 9 is a ninth schematic structural diagram of a vehicle integrated domain controller architecture according to an embodiment of this application;
FIG. 10 is a tenth schematic structural diagram of a vehicle integrated domain controller architecture according to an embodiment of this application;
FIG. 11 is an eleventh schematic structural diagram of a vehicle integrated domain controller architecture according to an embodiment of this application;
FIG. 12 is a twelfth schematic structural diagram of a vehicle integrated domain controller architecture according to an embodiment of this application; and
FIG. 13 is a thirteenth schematic structural diagram of a vehicle integrated domain controller architecture according to an embodiment of this application.

### EMBODIMENTS OF THE INVENTION

The embodiments of the technical solution of this application will be described in detail below in conjunction with the accompanying drawings. The following embodiments are only used to illustrate the technical solution of this application more clearly, and therefore are only examples and cannot be used to limit the protection scope of this application.

Unless otherwise defined, all technical and scientific terms used herein have the same meaning as commonly understood by those skilled in the technical field to which this application belongs; the terms used herein are only for the objective of describing specific embodiments and are not intended to limit this application; the terms "including" and "having" and any variations thereof in the description and claims of this application and the above description of the accompanying drawings are intended to cover non-exclusive inclusion.

In the description of the embodiments of this application, the technical terms "first," "second," and the like are only used to distinguish different objects and cannot be understood as indicating or implying relative importance or implicitly indicating the number, specific order, or primary-secondary relationship of the indicated technical features. In the description of the embodiments of this application, the meaning of "plurality" is two or more, unless otherwise explicitly and specifically defined.

Reference herein to "embodiment" means that a particular feature, structure, or characteristic described in conjunction with the embodiment may be included in at least one embodiment of this application. The appearance of the phrase in various places in the description does not necessarily refer to the same embodiment, nor is it an independent or alternative embodiment that is mutually exclusive with other embodiments. Those skilled in the art explicitly and implicitly understand that the embodiments described herein can be combined with other embodiments.

In the description of the embodiments of this application, the term "and/or" is merely a description of an association relationship of associated objects, indicating that three relationships can exist. For example, A and/or B can indicate: A exists alone, A and B exist simultaneously, and B exists alone. In addition, the character "/" herein generally indicates that the associated objects before and after are in an "or" relationship.

In the description of the embodiments of this application, the term "multiple" refers to two or more (including two).

In the description of the embodiments of this application, the technical terms "center," "longitudinal," "transverse," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on the orientations or positional relationships shown in the accompanying drawings, and are only for the convenience of describing the embodiments of this application and simplifying the description, rather than indicating or implying that the referred device or element must have a specific orientation, be constructed and operated in a specific orientation, and therefore cannot be understood as limiting the embodiments of this application.

In the related art, low-voltage power distribution for vehicle bodies usually adopts a discrete low-voltage lithium-ion battery technology. For example, a fuse box is configured based on a lithium-ion battery to achieve primary power distribution for low-voltage loads in the vehicle, and devices such as relays and fuses are usually used in the fuse box as drive devices and protection devices. However, in current vehicle power supply systems, regional controllers are usually deployed to control various functional modules inside the entire vehicle. Therefore, each functional module requires a separate controller to process data and control the devices in the functional module. Similarly, each functional module also requires an independent SBC module to supply power to the controller, and an independent AFE module is also required to establish communication between the control module and the upper computer. The related control architecture not only requires a large number of wiring harness connections, but also suffers from drawbacks such as large size and inconvenient maintenance.

In order to solve the above technical problems, the embodiments of this application provide a vehicle integrated domain controller architecture. The vehicle integrated domain controller architecture includes: a low-voltage battery 300, a battery management module 100, a low-voltage power distribution module 200, and a thermal management module 900; where the low-voltage battery 300 is electrically connected to the low-voltage power distribution module 200, the low-voltage power distribution module 200 is configured with low-voltage load access terminals 210 configured to connect low-voltage loads, and the thermal management module 900 is configured with a thermal management load access terminals 910 configured to connect thermal management loads. The battery management module 100, the low-voltage power distribution module 200, and the thermal management module 900 share the same controller 120, and the controller 120 integrates functions of managing the low-voltage battery 300, the low-voltage load, and the thermal management load.

In this embodiment, the low-voltage power distribution module 200 is configured with a plurality of load access terminals 210, where at least one of the load access terminals 210 is configured to connect a low-voltage load; the thermal management module 900 is configured with thermal management load access terminals 910 configured to connect thermal management loads, the low-voltage power distribution module 200 is connected to the low-voltage battery 300; the battery management module 100, the low-voltage power distribution module 200, and the thermal management module 900 share the same controller 120; the low-voltage power distribution module 200 is controlled by the controller 120 to regulate the power output of the low-voltage battery 300, the battery management module 100 is controlled by the controller 120 to manage the low-voltage battery 300, the low-voltage power distribution module 200 and the battery management module 100 constitute a vehicle low-voltage power distribution system, and the thermal management module 900 is controlled by the controller 120 to manage the thermal management loads. The thermal management module 900 constitutes a vehicle thermal management system. By integrating in the controller 120 the function of managing the low-voltage battery 300 and the thermal management loads and the function of performing power distribution control for the low-voltage loads, the battery management solution, the low-voltage power distribution solution, and the control module in the thermal management solution are innovatively integrated into the same controller 120. This simplifies the control circuits and offers the advantages such as low cost and simple architecture.

In some specific application embodiments, in the vehicle low-voltage power distribution system, the controller 120, together with a portion of power devices constitutes the battery management module 100; and the controller 120, together with another portion of power devices constitutes the low-voltage power distribution module 200. In the vehicle thermal management system, the controller 120, together with its external thermal management drive unit constitutes the thermal management module 900. In this embodiment, by designing the power supply voltage of the vehicle thermal management system to be consistent with the power supply voltage of the vehicle low-voltage power distribution system, the vehicle low-voltage power distribution system and the vehicle thermal management system are integrated, with the same controller 120 enabling the control and management of both the vehicle low-voltage power distribution system and the thermal management system. By integrating in the controller 120 the function of managing the low-voltage battery 300 and the thermal management loads and the function of performing power distribution control for the low-voltage loads. This not only reduces the communication wiring harness provided between the independent low-voltage power distribution system and the independent thermal management system, but also obviates the need for separate controllers and associated SBC power supply chips, thereby reducing the number of chips used and lowering the probability of malfunctions in power supply and communication wiring harnesses in the vehicle low-voltage power distribution system.

In this embodiment, the controller 120 integrates the function of managing the low-voltage battery 300 and the thermal management loads and the function of performing power distribution control for the low-voltage loads. After the vehicle is started, the controller 120 may manage the energy output of the entire vehicle low-voltage power distribution system based on thermal management feedback information of the vehicle, or may manage operating states of the thermal management loads based on the energy output of the entire vehicle low-voltage power distribution system. Consequently, the vehicle low-voltage power distribution system and the vehicle thermal management system are mutually adapted based on the current vehicle condition, thereby improving the power utilization efficiency and power supply stability of the entire vehicle low-voltage power distribution system.

In some specific application embodiments, since the controller 120, together with a portion of power devices, is configured to constitute the battery management module 100; the controller 120, together with another portion of power devices, is configured to constitute the low-voltage power distribution module 200; and the controller 120, together with the thermal management drive unit, is configured to constitute the thermal management module 900, a large fuse box is not required. The battery management module 100, the low-voltage power distribution module 200, the thermal management module 900, and the low-voltage battery 300 can be further integrated into a low-voltage battery assembly. This not only reduces the footprint of the vehicle low-voltage power distribution system and the vehicle thermal management system, but also shortens the wiring harness distance between the low-voltage battery 300 and the battery management module 100, shortens the wiring harness distance between the low-voltage battery 300 and the low-voltage power distribution module 200, and also shortens the wiring harness distance between the vehicle low-voltage power distribution system and the thermal management system, thereby lowering the probability of malfunctions in power supply and communication wiring harnesses in the vehicle low-voltage power distribution system and the thermal management system.

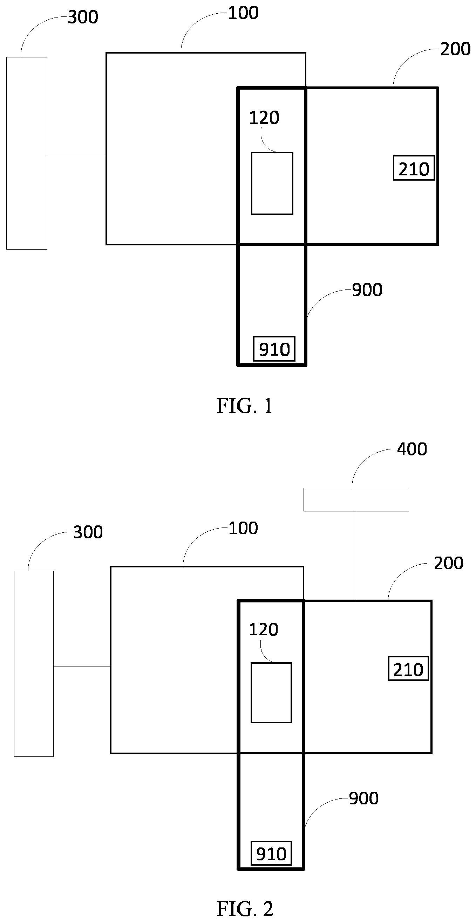

In some embodiments, as shown in FIG. 2, the vehicle integrated domain controller architecture in this embodiment further includes a low-voltage power input terminal 400, where the low-voltage power input terminal 400 is electrically connected to the low-voltage power distribution module 200, and the low-voltage power input terminal 400 may be configured to connect a low-voltage power supply obtained by conversion from a power battery, and the low-voltage power distribution module 200 performs power distribution for the input low-voltage power supply.

In this embodiment, the low-voltage power input terminal 400 is configured to connect a low-voltage power supply obtained by voltage conversion from the power battery, and the low-voltage power distribution module 200 distributes the low-voltage power supply to the low-voltage load access terminals 210. For example, under a condition of a plurality of low-voltage load access terminals 210, power distribution is performed according to the power demand of the low-voltage load connected to each low-voltage load access terminal 210, or power distribution may be performed according to the operating state of the connected low-voltage loads. This achieves dynamic adjustment of the output power of the low-voltage power supply, thereby fulfilling the objective of protecting the low-voltage battery 300 and the low-voltage loads.

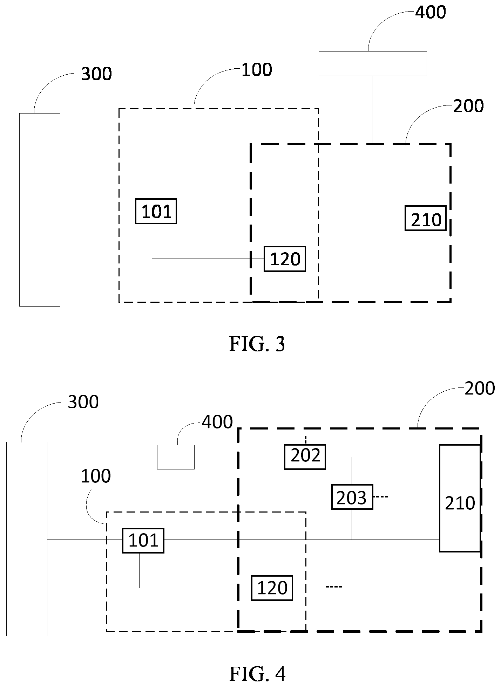

In some embodiments, as shown in FIG. 3, the battery management module 100 includes a first switch module 101, where the first switch module 101 is configured to manage the charging and discharging process of the low-voltage battery 300 under the control of the controller 120.

In this embodiment, the first switch module 101 is controlled by the controller 120, and the controller 120 controls the on/off state of the first switch module 101 to perform the charging and discharging operations of the low-voltage battery 300. This enables the low-voltage power distribution module 200 to share the first switch module 101 as its power distribution management unit, without providing a power distribution management device in the low-voltage power distribution module 200, which reduces the wiring harness between the low-voltage power distribution module 200 and the battery management module 100, and eliminates the potential safety hazards caused by short circuits in the wiring harness between different circuit boards.

In some specific application embodiments, the first switch module 101 and the controller 120 constitute the battery management module 100, and the low-voltage battery 300 is connected to the low-voltage power distribution module 200 via the first switch module 101. By connecting the low-voltage battery 300 and the low-voltage power distribution module 200 via the first switch module 101, this not only enables the low-voltage power distribution module 200 to share the first switch module 101 for regulating and managing the current input to the low-voltage power distribution module 200, but also provides short circuit protection for the low-voltage battery 300, thereby eliminating the potential safety hazards caused by malfunctions of the low-voltage battery 300.

In some embodiments, the low-voltage battery 300 is electrically connected to the low-voltage power distribution module 200 via the first switch module 101.

In this embodiment, the first switch module 101 is connected between the low-voltage battery 300 and the low-voltage power distribution module 200, the low-voltage battery 300 is electrically connected to the low-voltage power distribution module 200 via the first switch module 101, the first switch module 101 is controlled by the controller 120, and the controller 120 controls the on/off state of the first switch module 101 to control the on/off state between the low-voltage battery 300 and the low-voltage power distribution module 200. The first switch module 101 controls the power distribution output of the low-voltage power distribution module 200. This enables the low-voltage power distribution module 200 and the battery management module 100 to share the first switch module 101, which reduces the wiring harness between the low-voltage power distribution module 200 and the battery management module 100, and eliminates potential safety hazards caused by short circuits in the wiring harness between different circuit boards.

In some embodiments, as shown in FIG. 4, the low-voltage power distribution module 200 further includes a second switch module 202 controlled by the controller 120; where the second switch module 202 is configured to control an input state of the low-voltage power input terminal 400.

In this embodiment, the second switch module 202 is controlled by the controller 120 to control the input state of the low-voltage load access terminal 210, thereby controlling the power distribution output of the low-voltage power distribution module 200. For example, the low-voltage power input terminal 400 can be controlled to charge the low-voltage battery 300, or at least one of the low-voltage power input terminal 400 and the low-voltage battery 300 can be controlled to supply power to the low-voltage load access terminal 210. This achieves integrated control of the battery management module 100 and the low-voltage power distribution module 200.

In some embodiments, the second switch module 202 is connected between the low-voltage power input terminal 400 and the low-voltage load access terminal 210.

In some embodiments, the second switch module 202 is connected between the low-voltage power input terminal 400 and the battery management module 100.

In this embodiment, the second switch module 202 is controlled by the controller 120 to control the input state of the low-voltage power input terminal 400, thereby controlling the power distribution output of the low-voltage power distribution module 200. For example, the low-voltage power input terminal 400 can be controlled to charge the low-voltage battery 300, or at least one of the low-voltage power input terminal 400 and the low-voltage battery 300 can be controlled to supply power to the low-voltage load access terminal 210. This achieves integrated control of the battery management module 100 and the low-voltage power distribution module 200.

In some embodiments, as shown in FIG. 4, the low-voltage power distribution module 200 further includes a third switch module 203, where the third switch module 203 is controlled by the controller 120; and the third switch module 203 is configured to control a current direction between the low-voltage power input terminal 400 and the low-voltage battery 300 under the control of the controller 120.

In some embodiments, the third switch module 203 is connected between the second switch module 202 and the first switch module 101.

In this embodiment, the third switch module 203 is controlled by the controller 120, and the third switch module 203 is connected between the second switch module 202 and the first switch module 101. The controller 120 can control the on/off states of the first switch module 101, the second switch module 202, and the third switch module 203, and can control the low-voltage power input terminal 400 to charge the low-voltage battery 300, or control at least one of the low-voltage power input terminal 400 and the low-voltage battery 300 to supply power to the low-voltage load access terminals 210. This enables the third switch module 203 to control the current direction between the low-voltage power input terminal 400 and the low-voltage battery 300, thereby achieving integrated control of the power output of the battery management module 100 and the low-voltage power distribution module 200.

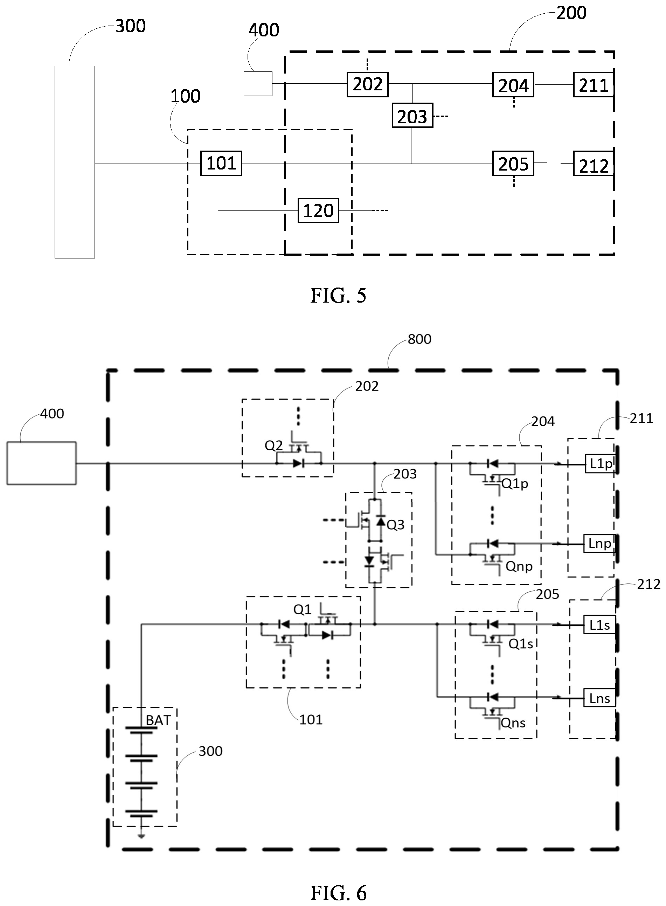

In some embodiments, as shown in FIG. 5, the low-voltage load access terminal 210 includes a first low-voltage load access terminal 211 and a second low-voltage load access terminal 212; where the first low-voltage load access terminal 211 and the second low-voltage load access terminal 212 are respectively connected to a first terminal and a second terminal of the third switch module 203.

In this embodiment, the first low-voltage load access terminal 211 and the second low-voltage load access terminal 212 are respectively connected to the first terminal and the second terminal of the third switch module 203. The controller 120 can control the on/off states of the first switch module 101, the second switch module 202, and the third switch module 203, and control the current direction between the low-voltage power input terminal 400 and the low-voltage battery 300 through the third switch module 203. This achieves integrated control of the power output of the battery management module 100 and the low-voltage power distribution module 200.

In some embodiments, as shown in FIG. 5, the low-voltage power distribution module 200 further includes a fourth switch module 204 and a fifth switch module 205, where the fourth switch module 204 is connected between the first terminal of the third switch module 203 and the first low-voltage load access terminal 211 and is controlled by the controller 120, and the fifth switch module 205 is connected between the second terminal of the third switch module 203 and the second low-voltage load access terminal 212 and is controlled by the controller 120.

In this embodiment, the first low-voltage load access terminal 211 is connected to the first terminal of the third switch module 203 via the fourth switch module 204, and the second low-voltage load access terminal 212 is connected to the second terminal of the third switch module 203 via the fifth switch module 205. The fourth switch module 204 controls a power-on state of the corresponding first low-voltage load access terminal 211, and the fifth switch module 205 controls a power-on state of the corresponding second low-voltage load access terminal 212, thereby achieving individual control and management of each low-voltage load.

In some embodiments, the fourth switch module 204 and the fifth switch module 205 are both MOS devices.

In some embodiments, the first low-voltage load access terminal 211 and the fourth switch module 204 each are provided in plurality, and the first low-voltage load access terminals 211 and the fourth switch modules 204 are arranged in one-to-one correspondence; and the second low-voltage load access terminal 212 and the fifth switch module 205 each are provided in plurality, and the second low-voltage load access terminals 212 and the fifth switch modules 205 are arranged in one-to-one correspondence.

In this embodiment, the plurality of first low-voltage load access terminals 211 may be arranged to be connected to the plurality of low-voltage loads, respectively, the fourth switch module 204 is disposed between each first low-voltage load access terminal 211 and the second switch module 202, and the fourth switch module 204 controls the power-on state of the corresponding first low-voltage load access terminal 211. The plurality of second low-voltage load access terminals 212 are arranged to be connected to the plurality of low-voltage loads, respectively, the fifth switch module 205 is disposed between each second low-voltage load access terminal 212 and the third switch module 203, and the fifth switch module 205 controls the power-on state of the corresponding second low-voltage load access terminal 212, thereby achieving individual control and management of each low-voltage load.

In one embodiment, as shown in FIG. 6, the low-voltage battery 300 may be composed of a plurality of battery cells BAT.

In one embodiment, as shown in FIG. 6, in the vehicle integrated domain controller architecture 800 of this embodiment, the first switch module 101 includes a first switch tube Q1, where the first switch tube Q1 may be a bidirectional switch device, a first terminal of the first switch tube Q1 is connected to the low-voltage battery 300, a second terminal of the first switch tube Q1 is connected to a second terminal of the third switch module 203, and two control terminals of the first switch tube Q1 are both connected to the controller 120. The bidirectional switch device is controlled by the controller 120 and may control the charging and discharging of the low-voltage battery 300. The second terminal of the third switch module 203 is connected to the low-voltage battery 300 via the first switch module 101. When the first switch module 101 is in a first conduction condition, the low-voltage battery 300 supplies power to the first low-voltage load access terminal 211 or the second low-voltage load access terminal 212 via the first switch module 101, and the low-voltage power input terminal 400 is unable to charge the low-voltage battery 300 under this condition.

When the first switch module 101 is in a second conduction condition, the low-voltage power input terminal 400 charges the low-voltage battery 300 via the first switch module 101.

When the first switch module 101 is in an off condition, the low-voltage battery 300 is disconnected from the third switch module 203 and the fifth switch module 205.

In some embodiments, the first switch tube Q1 may be an MOS device.

In some embodiments, as shown in FIG. 6, the third switch module 203 includes a third switch tube Q3, a first terminal and a second terminal of the third switch tube Q3 serve as the first terminal and the second terminal of the third switch module 203 respectively, the third switch tube Q3 may be a bidirectional switch device, and two control terminals of the third switch tube Q3 are both connected to the controller 120. When the first switch module 101 is in the first conduction condition and the third switch module 203 is in the first conduction condition, the low-voltage battery 300 supplies power to the first low-voltage load access terminal 211 via the first switch module 101 and the third switch module 203, and the low-voltage power input terminal 400 can also supply power to the first low-voltage load access terminal 211 via the second switch module 202 under this condition, but the current output by the low-voltage power input terminal 400 is unable to pass through the third switch module 203.

In one embodiment, the first low-voltage load access terminal 211 may be connected to a high-power low-voltage load. Since the battery management module 100 and the low-voltage power distribution module 200 are integrated on the same circuit board 123, when the controller 120 detects that the output power of the low-voltage power input terminal 400 cannot meet the demand power of the first low-voltage load access terminal 211, the first switch module 101 and the third switch module 203 may be controlled to be in the first conduction condition, so that the low-voltage battery 300 performs power compensation for the high-power low-voltage load connected to the first low-voltage load access terminal 211, thereby avoiding the problem of unstable power supply caused by excessive power of the connected low-voltage load.

In some embodiments, the third switch tube Q3 may be an MOS device.

In some embodiments, as shown in FIG. 6, the second switch module 202 includes a second switch tube Q2, where a first terminal of the second switch tube Q2 is connected to the low-voltage power input terminal 400, a second terminal of the second switch tube Q2 is connected to the first low-voltage load access terminal 211 via the fourth switch module 204, or the second terminal of the second switch tube Q2 is connected to the first terminal of the third switch module 203, a control terminal of the second switch tube Q2 is connected to the controller 120, and the second switch tube Q2 is turned on or off according to a control signal sent by the controller 120.

In some embodiments, the second switch tube Q2 may be an MOS device.

In some embodiments, as shown in FIG. 6, the fourth switch module 204 includes a plurality of switch devices (switch device Q1p, ..., switch device Qnp), the first low-voltage load access terminal 211 includes a plurality of load access terminals (load access terminal L1p, ..., load access terminal Lnp), the plurality of load access terminals (load access terminal L1p, ..., load access terminal Lnp) are respectively connected to the first terminal of the third switch module 203 via the plurality of switch devices (switch device Q1p, ..., switch device Qnp), and the plurality of switch devices (switch device Q1p, ..., switch device Qnp) are all controlled by the controller 120. The controller 120 controls the on/off state of each switch device, thereby achieving the objective of power distribution management for the low-voltage load connected to each load access terminal.

In some embodiments, as shown in FIG. 6, the fifth switch module 205 includes a plurality of switch devices (switch device Q1s, ..., switch device Qns), the second low-voltage load access terminal 212 includes a plurality of load access terminals (load access terminal L1s, ..., load access terminal Lns), the plurality of load access terminals (load access terminal L1s, ..., load access terminal Lns) are respectively connected to the second terminal of the third switch module 203 via the plurality of switch devices (switch device Q1s, ..., switch device Qns), and the plurality of switch devices (switch device Q1s, ..., switch device Qns) are all controlled by the controller 120. The controller 120 controls the on/off state of each switch device, thereby achieving the objective of power distribution management for the low-voltage load connected to each load access terminal.

In some embodiments, the switch devices Q1s, ..., the switch device Qns, the switch device Q1s, ..., and the switch device Qns are all MOS devices.

In some embodiments, the first switch tube Q1, the second switch tube Q2, the third switch tube Q3, the switch device Q1s, ..., and the switch device Qns are all MOS devices, and the first switch tube Q1, the second switch tube Q2, the third switch tube Q3, the switch device Q1s, ..., the switch device Qns, and the controller 120 are integrated on the same circuit board. This not only reduces the communication wiring harness provided between the independent low-voltage power distribution system and the independent thermal management system, but also obviates the need for separate controllers and associated SBC power supply chips, thereby reducing the number of chips used and lowering the probability of malfunctions in power supply and communication wiring harnesses in the vehicle low-voltage power distribution system.

In some embodiments, the thermal management module 900 may obtain power from the low-voltage load access terminal 210, and a power input terminal of the thermal management module 900 is connected to the low-voltage load access terminal 210.

In some embodiments, the thermal management module 900 may obtain power from the low-voltage power input terminal 400, and a power input terminal of the thermal management module 900 is connected to the low-voltage power input terminal 400.

In some embodiments, the thermal management module 900 may obtain power from the low-voltage battery 300, and a power input terminal of the thermal management module 900 is connected to the battery management module 100.

In some embodiments, the controller 120 is further connected to the thermal management load, and the controller 120 is configured to send a thermal management control signal to the thermal management load to manage the thermal management load.

In this embodiment, the controller 120 may be directly connected to the thermal management load and send a thermal management control signal to the thermal management load, and the thermal management load may adjust its own state according to the received thermal management control signal, thereby achieving the objective of thermal management of the vehicle under the condition of sharing the same controller with the battery management module 100.

In some embodiments, the thermal management module 900 includes a plurality of thermal management drive units, where the thermal management drive unit is configured to manage the thermal management load according to a thermal management control instruction sent by the controller 120.

In this embodiment, a plurality of thermal management loads are connected via the load access terminals 210, and each thermal management drive unit controls the state of the corresponding thermal management load according to a thermal management control instruction sent by the controller. The thermal management load does not need to be connected to a separate power supply or a separate control line, thereby enabling direct drive of the thermal management loads, simplifying the wiring layout of the thermal management loads, and eliminating potential faults in signal lines and power lines caused by directly connecting the thermal management load to the power supply or the controller.

In some embodiments, the thermal management module 900 further includes a plurality of sensor units, where the plurality of sensor units are configured to sample sampling nodes in the thermal management load to obtain thermal management sampling signals and send the signals to the controller 120, and the controller 120 is further configured to adjust a state of the thermal management drive unit according to the thermal management sampling signals.

In this embodiment, the sensor units sample the thermal management loads to obtain operating states of the thermal management loads, and the controller determines whether the thermal management loads are operating abnormally according to the sampled thermal management sampling signals, and adjusts the states of the thermal management drive units in real time, thereby reducing the probability of potential safety hazards in the entire vehicle.

In some embodiments, a power input terminal of the thermal management module 900 is connected to the low-voltage load access terminal 210 or the low-voltage power input terminal 400.

In this embodiment, the thermal management module 900 may be connected to the low-voltage load access terminal 210 to obtain power from the low-voltage power distribution module 200, or may be connected to the low-voltage power input terminal 400 to connect the low-voltage power supply obtained by conversion from the power battery to obtain power from an external source.

In one embodiment, when the thermal management module 900 obtains power from the low-voltage power distribution module 200, the low-voltage power distribution module 200 is configured to perform power distribution management on a plurality of thermal management drive units in the thermal management module 900 according to a power distribution instruction sent by the controller 120.

In this embodiment, the low-voltage power distribution module 200 may perform power distribution management on a plurality of thermal management drive units according to the power distribution instruction sent by the controller, a plurality of thermal management loads are directly connected to an output terminal of the thermal management module 900, and each thermal management drive unit controls the state of the corresponding thermal management load according to the thermal management control instruction sent by the controller 120, thereby achieving direct drive thermal management control of the vehicle.

In some embodiments, the low-voltage power distribution module 200 may include a plurality of power devices, where the plurality of power devices constitute a switch circuit, and the switch circuit is configured to output the low-voltage direct current output by the low-voltage battery 300 or the low-voltage power supply input by the low-voltage power input terminal 400 to a plurality of thermal management loads, and the thermal management loads are controlled by the controller 120, which can achieve non-direct drive management control of the thermal management loads.

In some embodiments, a plurality of thermal management drive units may be connected to one or more low-voltage load access terminals 210, and the low-voltage load access terminals 210 supply power to the thermal management drive units.

In one embodiment, when the thermal management module 900 obtains power via the low-voltage power input terminal 400, the thermal management module 900 further includes a thermal management power distribution unit, where the thermal management power distribution unit is connected to the battery management module 100, and the thermal management power distribution unit performs power distribution management on a plurality of thermal management drive units according to a power distribution instruction sent by the controller.

In this embodiment, the thermal management power distribution unit may perform power distribution management on a plurality of thermal management drive units according to the power distribution instruction sent by the controller 120, the load access terminal 210 may be connected to a plurality of thermal management loads, and each thermal management drive unit controls the state of the corresponding thermal management load according to the thermal management control instruction sent by the controller 120, thereby achieving direct drive thermal management control of the vehicle.

In some embodiments, the thermal management power distribution unit may be a switch assembly such as a relay or a fuse box.

In some embodiments, the plurality of thermal management drive units include at least one of a motor water pump control unit, a battery water pump control unit, an air conditioning water pump control unit, a fan control unit, a water valve control unit, an intake grille control unit, an expansion valve control unit, a shut-off valve control unit, a stepper motor control unit, and a blower control unit.

Specifically, the motor water pump control unit is controlled by the controller 120 and is configured to control and drive a motor water pump; the battery water pump control unit is controlled by the controller 120 and is configured to control and drive a battery water pump; the air conditioning water pump control unit is controlled by the controller 120 and is configured to control and drive an air conditioning water pump; the fan control unit is controlled by the controller 120 and is configured to control and drive an electric fan; the water valve control unit is controlled by the controller 120 and is configured to control and drive a water valve; the intake grille control unit is controlled by the controller 120 and is configured to control and drive an active air intake grille; the expansion valve control unit is controlled by the controller 120 and is configured to control and drive an expansion valve; the shut-off valve control unit is controlled by the controller 120 and is configured to control and drive a shut-off valve; the stepper motor control unit is controlled by the controller 120 and is configured to control and drive a unipolar/bipolar stepper motor damper; the blower control unit is controlled by the controller 120 and is configured to control and drive a blower.

In some embodiments, the thermal management load includes at least one of a motor water pump, a battery water pump, an air conditioning water pump, an electric fan, a water valve, an active intake grille, an expansion valve, a shut-off valve, a unipolar/bipolar stepper motor damper, and a blower.

In some embodiments, when there is only one low-voltage load access terminal 210, the thermal management load and the low-voltage load may be connected to the same low-voltage load access terminal 210, the low-voltage power distribution module 200 controls the operating state of the low-voltage load, and the thermal management module 900 controls the operating state of the thermal management load, thereby achieving simultaneous management and control of the low-voltage load and the thermal management load by the controller 120.

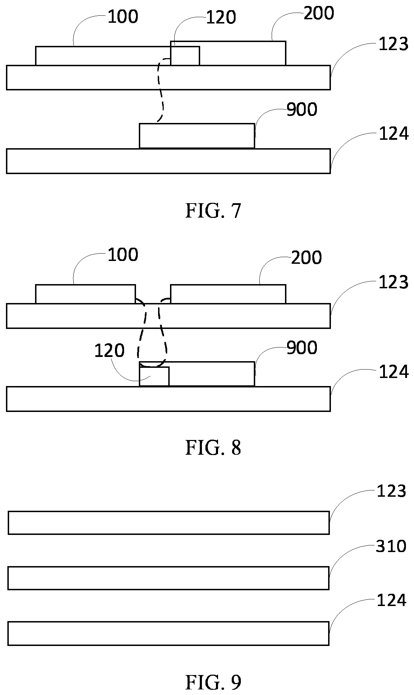

In some embodiments, as shown in FIG. 7, the vehicle integrated domain controller architecture includes a first circuit board 123 and a second circuit board 124, where the low-voltage power distribution module 200 and the battery management module 100 are integrated on the first circuit board 123, the controller 120 is also integrated on the first circuit board 123, and the thermal management module 900 is integrated on the second circuit board 124.

In this embodiment, since the battery management module 100, the low-voltage power distribution module 200, and the thermal management module 900 share the same controller 120, and the controller 120 and the thermal management drive unit constitute the thermal management module 900, when the controller 120 is integrated on the first circuit board 123, the thermal management drive unit is integrated on the second circuit board 124 and connected to the controller 120 on the first circuit board 123 via wiring harness, and the controller 120 sends a thermal drive control signal to the thermal management drive unit to perform the function of managing the thermal management load, which can reduce packet loss caused by data communication between circuit boards. The controller 120, together with a portion of its peripheral drive devices constitutes the battery management module 100 to manage the state of the low-voltage battery, and the controller 120, together with another portion of its peripheral drive devices constitutes the low-voltage power distribution module 200 to perform power distribution control on the load connected to the low-voltage load access terminal 210. The low-voltage power distribution module 200 and the battery management module 100 are integrated on the first circuit board 123, and the controller 120 is also integrated on the first circuit board 123. This can avoid the problem of requiring a large number of wiring harness connections between circuit boards caused by the independent arrangement of the original battery management module 100 and the low-voltage power distribution module 200, and reduce the probability of wiring harness failure by simplifying the circuits.

In some embodiments, external pins of the controller 120 can not only constitute the low-voltage power distribution module 200 and the battery management module 100 with the drive devices on the first circuit board 123, but also constitute the thermal management module 900 with the thermal management drive unit on the second circuit board 124, thereby achieving the effect of drive solution expansion.

In some embodiments, as shown in FIG. 8, the vehicle integrated domain controller architecture includes a first circuit board 123 and a second circuit board 124, where the low-voltage power distribution module 200 and the battery management module 100 are integrated on the first circuit board 123, the thermal management module 900 is integrated on the second circuit board 124, and the controller 120 is also integrated on the second circuit board 124.

In this embodiment, since the battery management module 100, the low-voltage power distribution module 200, and the thermal management module 900 share the same controller 120, the controller 120 and the thermal management drive unit form the thermal management module 900, and the controller 120 and other drive devices constitute the battery management module 100 and the low-voltage power distribution module 200. When the controller 120 is integrated on the second circuit board 124 and other drive devices are integrated on the first circuit board 123, the other drive devices are connected to the controller 120 on the second circuit board 124 via wiring harness, and the controller 120 sends corresponding drive control signals to the other drive devices to perform related battery management and low-voltage power distribution management functions. Through the design in this embodiment, packet loss caused by data communication between circuit boards can be reduced.

In some embodiments, the controller 120, together with a portion of drive devices on the first circuit board 123, constitutes the battery management module 100 to manage the state of the low-voltage battery; and the controller 120, together with another portion of drive devices on the first circuit board 123, constitutes the low-voltage power distribution module 200 to perform power distribution control on the load connected to the low-voltage load access terminal 210. The drive devices in the low-voltage power distribution module 200 and the battery management module 100 are integrated on the first circuit board 123, and the controller 120 and the thermal management drive unit are integrated on the second circuit board 124. This not only improves the heat dissipation efficiency of the drive devices, but also avoids the problem of requiring a large number of wiring harnesses for signal transmission and data communication between circuit boards caused by the independent arrangement of the original battery management module 100, low-voltage power distribution module 200, and thermal management module 900, and lowers the probability of wiring harness failure and data packet loss by simplifying the circuits.

In some embodiments, external pins of the controller 120 can not only constitute the low-voltage power distribution module 200 and the battery management module 100 with the drive devices on the first circuit board 123, but also constitute the thermal management module 900 with the thermal management drive unit on the second circuit board 124, thereby achieving the effect of drive solution expansion.

In some embodiments, the controller 120 may also expand its external pins, for example, by welding its external expansion pins on an extension line on the first circuit board 123 and connecting the extension line on the first circuit board 123 via a plurality of pads, the functions of the external expansion pins of the controller 120 are customized and multiplexed, thereby achieving the objective of customizing vehicle functions.

In some embodiments, as shown in FIG. 9, the vehicle integrated domain controller architecture further includes a vehicle heat dissipation plate 310, where the first circuit board 123 is disposed on a first side of the vehicle heat dissipation plate 310, the second circuit board 124 is disposed on a second side of the vehicle heat dissipation plate 310, the second side of the vehicle heat dissipation plate 310 is opposite the first side of the vehicle heat dissipation plate 310, and the vehicle heat dissipation plate 310 is configured to dissipate heat for the first circuit board 123 and the second circuit board 124.

In this embodiment, the first circuit board 123 and the second circuit board 124 are respectively disposed on two sides of the same vehicle heat dissipation plate 310. By having the first circuit board 123 and the second circuit board 124 share the same vehicle heat dissipation plate 310, the heat dissipation efficiency of the vehicle can be improved, and the volume of the vehicle can be reduced.

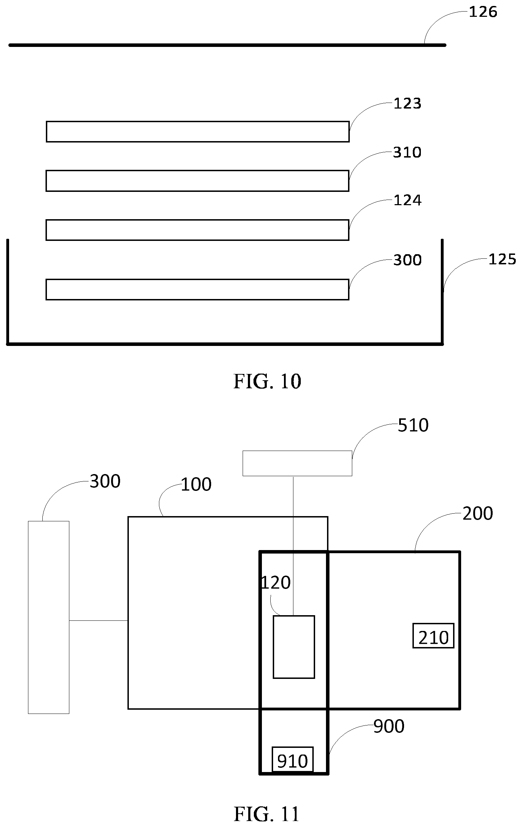

In some embodiments, as shown in FIG. 10, the low-voltage battery 300 is disposed on the second side of the vehicle heat dissipation plate 310, and the second circuit board 124 is disposed between the low-voltage battery 300 and the vehicle heat dissipation plate 310 to dissipate heat for the low-voltage battery 300.

In this embodiment, a thermal management drive unit is provided on the second circuit board 124. By disposing the second circuit board 124 between the low-voltage battery 300 and the vehicle heat dissipation plate 310, not only the wiring harness length between the thermal management drive unit and the low-voltage drive device can be reduced, but also temperature management of the low-voltage battery 300 can be performed by integrating related thermal management drive units on the second circuit board 124, thereby reducing the signal transmission distance and reducing the volume of the vehicle.

In some embodiments, as shown in FIG. 10, the low-voltage battery 300 is disposed in a product lower cover 125, the product lower cover 125 has a concave structure, the product lower cover 125 and a product upper cover 126 form an accommodating cavity, the first circuit board 123, the vehicle heat dissipation plate 310, and the second circuit board 124 are stacked on the low-voltage battery 300, and the first circuit board 123, the vehicle heat dissipation plate 310, and the second circuit board 124 are fixed by a mounting structure, where a distance between the first circuit board 123, the vehicle heat dissipation plate 310, the second circuit board 124, and the low-voltage battery 300 may be set according to heat dissipation requirements and wiring harness requirements.

In some embodiments, the vehicle heat dissipation plate 310 may be a water cooling plate, and the water cooling plate is disposed between the first circuit board 123 and the second circuit board 124. After the vehicle is started, the water cooling plate absorbs heat dissipated by the first circuit board 123 and the second circuit board 124, thereby improving the space utilization efficiency inside the vehicle and reducing the size and volume of the vehicle power distribution system.

In some embodiments, the controller 120 has at least two cores.

In this embodiment, the controller 120 has at least two cores, and a plurality of functions of the controller 120 can be allocated to a plurality of cores, thereby improving the processing efficiency of the controller 120.

In some embodiments, at least one core of the controller 120 is configured to process sampling signals of the low-voltage battery 300 to obtain sampling data, and at least one core of the controller 120 is configured to generate control data according to the sampling data and output corresponding control signals based on the control data to control the operating state of the low-voltage battery 300.

In this embodiment, the controller 120 includes at least two cores, one or a portion of the cores may be configured to process the sampling signals to obtain corresponding sampling data, and the other core or another portion of the cores may be configured to process the sampling data, obtain control data according to a preset operation, and generate control signals based on the control data and output the signals to the peripheral drive devices to control the operating state of the low-voltage battery 300 by controlling the operating states of the drive devices.

In some embodiments, at least one core of the controller 120 is configured to process sampling signals of the low-voltage loads to obtain sampling data, and at least one core of the controller 120 is configured to generate control data according to the sampling data and output corresponding control signals based on the control data to control the power distribution output of the low-voltage loads.

In this embodiment, the controller 120 includes at least two cores, one or a portion of the cores may be configured to process the sampling signals to obtain corresponding sampling data, and the other core or another portion of the cores may be configured to process the sampling data, obtain control data according to a preset operation, and generate control signals based on the control data and output the signals to the peripheral drive devices to control the power distribution output of the low-voltage load by controlling the operating states of the drive devices.

In some embodiments, at least one core of the controller 120 is configured to process sampling signals of the thermal management module 900 to obtain sampling data, and at least one core of the controller 120 is configured to generate control data according to the sampling data and output corresponding control signals based on the control data to control the power distribution output of the low-voltage loads.

In this embodiment, the controller 120 includes at least two cores, one or a portion of the cores may be configured to process the sampling signals to obtain corresponding sampling data, and the other core or another portion of the cores may be configured to process the sampling data, obtain control data according to a preset operation, and generate control signals based on the control data and output the signals to the peripheral thermal management drive units to control the operating states of the thermal management loads by controlling the operating states of the thermal management drive units.

In some embodiments, as shown in FIG. 11, the vehicle integrated domain controller architecture includes an SBC power supply module 510, where the SBC power supply module 510 is connected to the controller 120, and the SBC power supply module 510 is configured to supply power to the controller 120.

In this embodiment, the SBC power supply module 510 in the vehicle integrated domain controller architecture may be integrated in the battery management module 100 or the low-voltage power distribution module 200, or may be integrated in the thermal management module 900, and the power source of the SBC power supply module 510 may be the low-voltage battery 300.

In some embodiments, a power input terminal of the SBC power supply module 510 is connected to both the low-voltage battery 300 and the low-voltage power input terminal 400, and a power output terminal of the SBC power supply module 510 is connected to the controller 120.

In this embodiment, the power input terminal of the SBC power supply module 510 may obtain power from the low-voltage battery 300 or the low-voltage power input terminal 400, and convert the voltage input from the low-voltage battery 300 or the low-voltage power input terminal 400 into the power supply voltage of the controller 120, thereby achieving the objective of supplying power to the controller 120 and avoiding the problem of additional wiring harness required for the controller 120 to obtain power from an external power supply.

In some embodiments, the power input terminal of the SBC power supply module 510 may be simultaneously connected to the low-voltage battery 300 and the low-voltage power input terminal 400, an anti-backflow circuit is provided between the power input terminal of the SBC power supply module 510 and the low-voltage battery 300, and an anti-backflow circuit is provided between the power input terminal of the SBC power supply module 510 and the low-voltage power input terminal 400. This can prevent current backflow generated when the low-voltage battery 300 and the low-voltage power input terminal 400 output current, thereby improving the safety of the power supply circuit.

The power management chip (System Base Chip, SBC) is a provider of operating voltage for the controller 120 and its peripheral devices. Without SBC power supply, the peripheral devices of the controller would be inoperable. In this embodiment, the controller 120, together with a portion of power devices, constitutes the battery management module 100, the controller 120 and another portion of power devices constitute the low-voltage power distribution module 200, and the controller 120 integrates the function of managing the low-voltage battery 300 and the function of performing power distribution control on the low-voltage load. Therefore, the SBC power supply module 510 outputs a plurality of voltages according to the input power supply to supply power to the controller 120 and its peripheral power devices. Only one SBC chip is required to supply power to the components of the entire vehicle low-voltage power distribution system. This not only reduces the number of SBC chips, but also optimizes the power management solution of the low-voltage power distribution system, mitigates the issue of performance instability caused by inconsistent power supply voltages in the independent SBC solution, and enhances the operational consistency of power devices and chips in the low-voltage power distribution system. For example, the SBC power supply module 510 outputs an independent 3.3 V power supply to the controller 120, and can also separately output an independent 3.3 V power supply to analog chips on the circuit board 123 and an independent 5 V power supply to communication chips on the circuit board 123. The input power supply of the SBC power supply module 510 is consistent, which can improve the consistency of its output voltage.

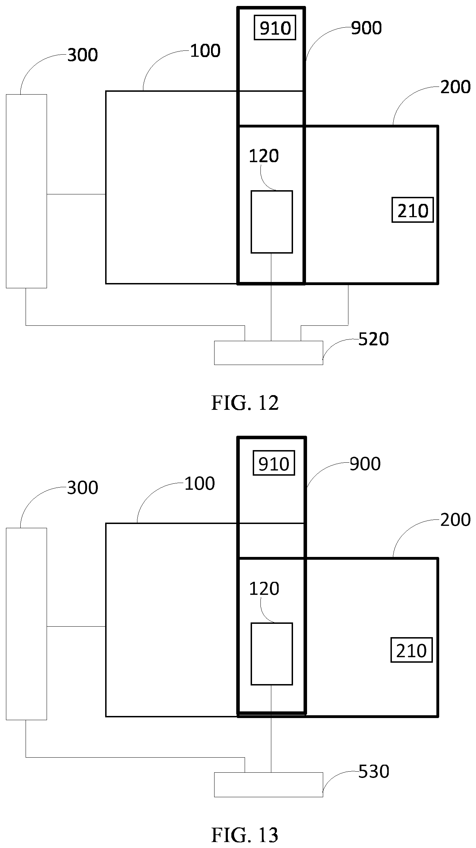

In some embodiments, as shown in FIG. 12, the vehicle integrated domain controller architecture further includes a sampling module 520, where the sampling module 520 is configured to perform voltage sampling on sampling nodes of the low-voltage battery 300, the battery management module 100, the low-voltage power distribution module 200, and the thermal management module 900, and generate an electrical parameter sampling signal, the controller 120 is connected to the sampling module 520, and the controller 120 is further configured to control the operating state of the low-voltage battery 300 according to the electrical parameter sampling signals.

In this embodiment, a plurality of sampling nodes are provided in the battery management module 100, the low-voltage power distribution module 200, and the thermal management module 900, and the voltages of the plurality of sampling nodes are sampled to obtain electrical parameter sampling signals. The controller 120 determines whether the voltages of the sampling nodes corresponding to the electrical parameter sampling signals meet the operating condition of the current operating states according to the received electrical parameter sampling signals, thereby controlling the operating state of the battery management module 100. Consequently, the battery management module 100 can adjust the parameters of the low-voltage battery 300 in real time according to the electrical parameters of the sampling nodes, reducing the potential safety hazards caused by circuit failure. For example, when the voltage at an input node of the low-voltage power distribution module 200 is undervoltage, the output voltage or output current of the low-voltage battery 300 is increased through the battery management module 100, thereby achieving the objective of increasing the output power of the low-voltage battery 300 according to the power demand of the load end.

In some embodiments, the sampling module 520 is configured to perform current sampling on sampling nodes of the low-voltage power distribution module 200 and the thermal management module 900, and generate electrical parameter sampling signals; and the controller 120 is further configured to control the operating state of the battery management module 100 according to the electrical parameter sampling signals.

In this embodiment, a plurality of sampling nodes are provided in the battery management module 100, the low-voltage power distribution module 200, and the thermal management module 900, and the currents of the plurality of sampling nodes are sampled to obtain electrical parameter sampling signals. The controller 120 determines whether the current of the sampling nodes corresponding to the electrical parameter sampling signals meet the operating condition of the current operating states according to the received electrical parameter sampling signals, thereby controlling the operating state of the battery management module 100. Consequently, the battery management module 100 can adjust the operating state of the low-voltage battery 300 in real time according to the electrical parameters of the low-voltage battery 300, the low-voltage power distribution module 200, and the thermal management module 900, reducing the potential safety hazards caused by circuit failure. For example, when the current at an input node of the battery management module 100 is excessive, the charging current of the battery management module 100 to the low-voltage battery 300 can be reduced by controlling the operating state of the battery management module 100, reducing the risk of potential safety hazards to the battery caused by excessive charging current.

In some embodiments, the low-voltage power distribution module 200 and the battery management module 100 are integrated on the same first circuit board 123, and the low-voltage power distribution module 200 is connected to the battery management module 100. Sampling only the common node of the low-voltage power distribution module 200 and the battery management module 100 enables sampling of their output currents. This can eliminate the need for at least one current sampling chip, thereby achieving the objective of reducing the cost of the control system.

In some embodiments, the sampling module 520 is configured to perform current sampling and voltage sampling on sampling nodes of the low-voltage battery 300, the battery management module 100, the low-voltage power distribution module 200, and the thermal management module 900, and generate electrical parameter sampling signals, and the controller 120 is further configured to control the operating state of the low-voltage power distribution module 200 according to the electrical parameter sampling signals.

In this embodiment, a plurality of sampling nodes are provided in the battery management module 100, the low-voltage power distribution module 200, and the thermal management module 900, and the voltages or currents of the plurality of sampling nodes are sampled to obtain electrical parameter sampling signals. The controller 120 determines whether the voltages or currents of the sampling nodes corresponding to the electrical parameter sampling signals meet the operating condition of the current operating states according to the received electrical parameter sampling signals, thereby controlling the operating state of the low-voltage power distribution module 200, so that the low-voltage power distribution module 200 can adjust the operating state in real time according to the electrical parameters of the battery management module 100, the low-voltage power distribution module 200, and the thermal management module 900, reducing the potential safety hazards caused by circuit failure or malfunctions in the low-voltage battery 300.

For example, when the voltage at an output node of the low-voltage power distribution module 200 is undervoltage or the output node of the low-voltage power distribution module 200 is overloaded, by controlling the operating state of the low-voltage power distribution module 200, the low-voltage battery 300 and the low-voltage power input terminal 400 can be simultaneously connected, thereby increasing the input power of the low-voltage power distribution module 200, achieving the objective of adjusting the input power according to the load demand power of the output end, and reducing the risk of potential safety hazards caused by overload of the output end.

In some embodiments, the sampling module 520 can also sample the temperature of a plurality of sampling nodes provided in the low-voltage battery 300, the low-voltage power distribution module 200, the battery management module 100, and the thermal management module 900 to obtain corresponding temperature sampling signals, and the controller 120 determines whether the temperature of the sampling node corresponding to the temperature sampling signal meets the operating condition of the current operating state according to the received temperature sampling signal, thereby controlling the operating states of the low-voltage power distribution module 200, the battery management module 100, and the thermal management module 900, so that the low-voltage power distribution module 200, the battery management module 100, and the thermal management module 900 can adjust their operating states in real time according to the temperature of their sampling nodes, reducing the problem of potential safety hazards in the vehicle caused by the temperature of the vehicle temperature sampling node exceeding a threshold temperature range.

In some embodiments, the controller 120 includes at least two cores. After the low-voltage power distribution module 200, the battery management module 100, and the thermal management module 900 share the same controller 120, the data collected by the sampling module 520 can be directly output to the controller 120 and uniformly processed by the controller 120. This obviates the need for a host processor to send messages via a CAN bus and prevents external interference, thereby mitigating the issue of information loss caused by message failure.

In some embodiments, the controller 120 controls a plurality of low-voltage load access terminals 210 of the low-voltage power distribution module 200 to be powered on in a time-division manner when a plurality of power-consuming low-voltage loads are connected to the low-voltage load access terminal 210.

In this embodiment, a plurality of low-voltage load access terminals 210 of the low-voltage power distribution module 200 may be respectively connected to a plurality of power-consuming loads. When a plurality of power-consuming loads are connected, the controller 120 controls the plurality of low-voltage load access terminals 210 to be powered on in a time-division manner. This can satisfy the power demand of the plurality of low-voltage loads without increasing or significantly increasing the output current of the low-voltage power distribution module 200, avoiding the potential safety hazards caused by excessive output current when a plurality of low-voltage load access terminals 210 are powered on simultaneously.

In some embodiments, as shown in FIG. 13, the vehicle integrated domain controller architecture further includes an AFE module 530, where the AFE module 530 is connected to both the low-voltage battery 300 and the controller 120, and the AFE module 530 is configured to perform information collection on the low-voltage battery 300 and perform information interaction with the controller 120.

In this embodiment, the AFE module 530 is connected to both the low-voltage battery 300 and the controller 120, and can perform information collection on the low-voltage battery 300 through the AFE module 530 and perform information interaction with the controller 120.

In some embodiments, the controller 120 is connected to the AFE module 530 via a non-multiplexed synchronous serial communication interface.

In this embodiment, the controller 120 is connected to the AFE module 530 via a non-multiplexed synchronous serial communication interface, which enables the establishment of high-speed full-duplex communication between the controller 120 and the AFE module 530. Data pins of the controller 120 perform data transmission of a set type, for example, each communication module corresponds to one interactive function module, and thus operates independently without being affected by other pins or modules.

In some embodiments, the output voltage range of the low-voltage battery 300 is 12 V-72 V.

In some embodiments, the low-voltage battery 300 includes a 12-volt lithium-ion battery or sodium-ion battery, or other rechargeable batteries.

In some embodiments, the low-voltage battery 300 includes a 24-volt lithium-ion battery or sodium-ion battery, or other rechargeable batteries.

In some embodiments, the low-voltage battery 300 includes a 48-volt lithium-ion battery or sodium-ion battery, or other rechargeable batteries.

In some embodiments, the low-voltage battery 300 includes a 72 V lithium-ion battery or sodium-ion battery, or other rechargeable batteries.

In this embodiment, the vehicle integrated domain controller architecture in the embodiments of this application can be applied to fuel vehicles and new energy vehicles, where the output voltage of the low-voltage battery in the vehicle does not exceed 72 V.

An embodiment of this application further provides a vehicle management system, where the vehicle management system includes the vehicle integrated domain controller architecture according to any one of the above embodiments.

The vehicle management system in this embodiment can be applied to low-voltage batteries configured in fuel vehicles and new energy vehicles, and is not limited to the field of passenger vehicles or commercial vehicles.

An embodiment of this application further provides a vehicle, where the vehicle includes the vehicle integrated domain controller architecture according to any one of the above embodiments.

In this embodiment, by integrating the vehicle integrated domain controller architecture described in any one of the above embodiments in a vehicle, the battery management module, the low-voltage power distribution module, and the thermal management module can be integrated into one structural member, and the battery management module, the low-voltage power distribution module, and the thermal management module share the same controller. This optimizes the electrical architecture of the vehicle power distribution system, simplifies associated components of the entire vehicle, and greatly reduces the costs of the entire vehicle.

Those skilled in the art can clearly understand that, for the convenience and brevity of description, only the division of the above functional units and modules is illustrated as an example. In practical applications, the above functions can be allocated to different functional units and modules as needed, that is, the internal structure of the device is divided into different functional units or modules to complete all or part of the functions described above. The functional units and modules in the embodiments can be integrated in one processing unit, or each unit can exist physically alone, or two or more units can be integrated in one unit. In addition, the specific names of the functional units and modules are only for the objective of distinguishing each other and are not used to limit the protection scope of this application. For the specific working process of the units and modules in the above system, reference can be made to the corresponding process in the foregoing method embodiments, which will not be repeated herein.

In the embodiments described above, the description of each embodiment has its own focus. For parts that are not elaborated on or recorded in a certain embodiment, reference may be made to the relevant descriptions of other embodiments.

In the embodiments provided in this application, it should be understood that the disclosed device and method can be implemented in other ways. For example, the electronic device embodiments described above are merely illustrative. For example, the division of modules or units is only a logical function division, and there can be other division ways in actual implementation, for example, a plurality of units or components can be combined or integrated into another system, or some features can be ignored or not executed. As another point, the mutual coupling or direct coupling or communication connection shown or discussed can be indirect coupling or communication connection through some interfaces, devices, or units, and can be electrical, mechanical, or in other forms.

The units described as separate components may or may not be physically separate, and the components displayed as units may or may not be physical units, that is, they may be located in one place or may be distributed on a plurality of network units. Some or all of the units can be selected according to actual needs to achieve the objective of the solution of the embodiments.

In addition, each functional unit in each embodiment of this application can be integrated in one processing unit, or each unit can exist physically alone, or two or more units can be integrated in one unit. The above integrated unit can be implemented in the form of hardware or in the form of software functional unit.

The above embodiments are only used to illustrate the technical solution of this application and are not intended to limit it; although this application has been described in detail with reference to the foregoing embodiments, those of ordinary skill in the art should understand that they can still modify the technical solutions recorded in the foregoing embodiments or make equivalent replacements for some of the technical features; and these modifications or replacements do not make the essence of the corresponding technical solutions deviate from the spirit and scope of the technical solutions of the embodiments of this application, and should be included in the protection scope of this application.

## Claims

1. A vehicle integrated domain controller architecture, **characterized by** comprising: a low-voltage battery, a battery management module, a low-voltage power distribution module, and a thermal management module; wherein
the low-voltage battery is electrically connected to the low-voltage power distribution module;
the low-voltage power distribution module is configured with low-voltage load access terminals; wherein at least one of the low-voltage load access terminals is configured to connect a low-voltage load;
the thermal management module is configured with a thermal management load access terminal configured to connect a thermal management load; and
the battery management module, the low-voltage power distribution module, and the thermal management module share the same controller, and the controller integrates a function of managing the low-voltage battery and a function of managing the thermal management load and the low-voltage load.

2. The vehicle integrated domain controller architecture according to claim 1, **characterized in that** the vehicle integrated domain controller architecture further comprises:
a low-voltage power input terminal electrically connected to the low-voltage power distribution module, and configured to connect a low-voltage power supply obtained by conversion from a power battery; wherein
the low-voltage power distribution module is further configured to perform power distribution for the low-voltage power supply.

3. The vehicle integrated domain controller architecture according to claim 2, **characterized in that** the battery management module further comprises: a first switch module controlled by the controller; wherein
the first switch module is configured to manage the charging and discharging process of the low-voltage battery under the control of the controller.

4. The vehicle integrated domain controller architecture according to claim 3, **characterized in that** the low-voltage battery is electrically connected to the low-voltage power distribution module via the first switch module.

5. The vehicle integrated domain controller architecture according to claim 3, **characterized in that** the low-voltage power distribution module further comprises: a second switch module controlled by the controller; wherein
the second switch module is configured to control an input state of the low-voltage power input terminal.

6. The vehicle integrated domain controller architecture according to claim 5, **characterized in that** the second switch module is connected between the low-voltage power input terminal and the low-voltage load access terminal; and/or
the second switch module is connected between the low-voltage power input terminal and the battery management module.

7. The vehicle integrated domain controller architecture according to claim 5, **characterized in that** the low-voltage power distribution module further comprises: a third switch module controlled by the controller; wherein
the third switch module is configured to control a current direction between the low-voltage power input terminal and the low-voltage battery.

8. The vehicle integrated domain controller architecture according to claim 7, **characterized in that** the third switch module is connected between the second switch module and the first switch module.

9. The vehicle integrated domain controller architecture according to claim 7, **characterized in that** the low-voltage load access terminal comprises a first low-voltage load access terminal and a second low-voltage load access terminal; wherein
the first low-voltage load access terminal and the second low-voltage load access terminal are respectively connected to a first terminal and a second terminal of the third switch module.

10. The vehicle integrated domain controller architecture according to claim 9, **characterized in that** the low-voltage power distribution module further comprises:
a fourth switch module connected between the first terminal of the third switch module and the first low-voltage load access terminal and controlled by the controller; and
a fifth switch module connected between the second terminal of the third switch module and the second low-voltage load access terminal and controlled by the controller.

11. The vehicle integrated domain controller architecture according to any one of claims 2 to 10, **characterized in that** the thermal management module obtains power from at least one of the low-voltage load access terminal, the low-voltage power input terminal, or the low-voltage battery.

12. The vehicle integrated domain controller architecture according to any one of claims 1 to 10, **characterized in that** the controller is further connected to the thermal management load, and the controller is configured to send a thermal management control signal to the thermal management load to manage the thermal management load.

13. The vehicle integrated domain controller architecture according to any one of claims 1 to 10, **characterized in that** the thermal management module further comprises a plurality of thermal management drive units; wherein
the thermal management drive unit is configured to manage the thermal management load according to a thermal management control instruction sent by the controller.

14. The vehicle integrated domain controller architecture according to claim 13, **characterized in that** the thermal management module further comprises a plurality of sensor units; wherein
the plurality of sensor units are configured to sample sampling nodes in the thermal management load to obtain thermal management sampling signals and send the signals to the controller; and the controller is further configured to adjust a state of the thermal management drive unit according to the thermal management sampling signals.

15. The vehicle integrated domain controller architecture according to any one of claims 1 to 10, **characterized in that** the vehicle integrated domain controller architecture comprises a first circuit board and a second circuit board; wherein
the low-voltage power distribution module and the battery management module are integrated on the first circuit board, and the controller is integrated on the first circuit board, and the thermal management module is integrated on the second circuit board; or
the low-voltage power distribution module and the battery management module are integrated on the first circuit board, the thermal management module is integrated on the second circuit board, and the controller is integrated on the second circuit board.

16. The vehicle integrated domain controller architecture according to claim 15, **characterized in that** the vehicle integrated domain controller architecture further comprises a vehicle heat dissipation plate; wherein
the first circuit board is disposed on a first side of the vehicle heat dissipation plate, and the second circuit board is disposed on a second side of the vehicle heat dissipation plate, wherein the second side of the vehicle heat dissipation plate is opposite the first side of the vehicle heat dissipation plate.

17. The vehicle integrated domain controller architecture according to any one of claims 1 to 10, **characterized in that** the controller has at least two cores.

18. The vehicle integrated domain controller architecture according to claim 17, **characterized in that** at least one core of the controller is configured to process sampling signals to obtain sampling data, and at least one core of the controller is configured to generate control data according to the sampling data and output corresponding control signals based on the control data to control an operating state of the low-voltage battery, and/or control the power distribution output of the low-voltage load, and/or control an operating state of the thermal management module.

19. The vehicle integrated domain controller architecture according to any one of claims 1 to 10, **characterized in that** the battery management module comprises:
an SBC power supply module connected to the controller, configured to supply power to the controller.

20. The vehicle integrated domain controller architecture according to claim 19, **characterized in that** a power input terminal of the SBC power supply module is connected to both the low-voltage battery and the low-voltage power input terminal, and a power output terminal of the SBC power supply module is connected to the controller.

21. The vehicle integrated domain controller architecture according to any one of claims 1 to 10, **characterized in that** the vehicle integrated domain controller architecture further comprises:
a sampling module configured to perform voltage sampling and/or current sampling on the battery management module, the low-voltage battery, the low-voltage power distribution module, and the thermal management module, and generate electrical parameter sampling signals; wherein
the controller is connected to the sampling module, and the controller is further configured to control an operating state of the battery management module according to the electrical parameter sampling signals.

22. The vehicle integrated domain controller architecture according to claim 21, **characterized in that** the controller is further configured to control the operating state of the thermal management module and/or the low-voltage power distribution module according to the electrical parameter sampling signals.

23. The vehicle integrated domain controller architecture according to any one of claims 1 to 10, **characterized in that** the controller controls a plurality of low-voltage load access terminals of the low-voltage power distribution module to be powered on in a time-division manner when a plurality of power-consuming low-voltage loads are connected to the low-voltage load access terminals.

24. The vehicle integrated domain controller architecture according to any one of claims 1 to 10, **characterized by** further comprising an AFE module connected to the low-voltage battery and the controller, and configured to perform information collection on the low-voltage battery and perform information interaction with the controller.

25. The vehicle integrated domain controller architecture according to claim 24, **characterized in that** the controller is connected to the AFE module via a non-multiplexed synchronous serial communication interface.

26. A vehicle management system, **characterized in that** the vehicle management system comprises the vehicle integrated domain controller architecture according to any one of claims 1 to 25.

27. A vehicle, **characterized in that** the vehicle comprises the vehicle integrated domain controller architecture according to any one of claims 1 to 25.
